# EUROPEAN PATENT APPLICATION

(11) **EP 4 290 957 A1**
(43) Date of publication of application: **13.12.2023**
(21) Application number: 22749746.8
(22) Date of filing: 02.02.2022
(51) Int. Cl.: H04W 72/04, H04W 72/10, H04W 72/12

(54) **TERMINAL, WIRELESS COMMUNICATION METHOD, AND BASE STATION**

(30) Priority: 04.02.2021 JP 2021016555
(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN)
(74) Representative: Hoffmann Eitle
(86) International application number: PCT/JP2022/004066
(87) International publication number: WO 2022/168875

(57) **Abstract**

UL transmissions can be appropriately controlled, even when multiple UL transmissions with different priorities overlap. A terminal according to an aspect of the present disclosure comprising: a receiving section that receives at least one of: first information regarding a configuration of simultaneous transmission of UL transmissions with different priorities; and second information regarding a configuration of multiplexing of UL transmissions with different priorities; and a control section that controls, when multiple UL transmissions with different priorities overlap in a time domain, transmission processing of the multiple UL transmissions based on at least one of the first information and the second information.

## Description

### Technical Field

The present disclosure relates to a terminal, a radio communication method, and a base station in next-generation mobile communication systems.

### Background Art

In a Universal Mobile Telecommunications System (UMTS) network, specifications of Long-Term Evolution (LTE) have been drafted for the purpose of further increasing data rates, providing low latency, etc. (Non Patent Literature 1). In addition, specifications of LTE-Advanced (3GPP Releases (Rel.) 10 to 14) have been drafted for the purpose of further increasing capacity and advancing LTE (Third Generation Partnership Project (3GPP) Rel. 8 and 9).

Successor systems to LTE (for example, also referred to as the 5th generation mobile communication system (5G), 5G+ (plus), New Radio (NR), or 3GPP Rel. 15 and subsequent releases) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Future radio communication systems (such as 5G or NR, for example) are expected to involve a plurality of services (also referred to as use cases, communication types, etc.) having different communication requirements such as higher speed and larger capacity (for example, enhanced Mobile Broad Band (eMBB)), a massive amount of terminals (for example, massive machine type communication (mMTC) or Internet of Things (IoT)), and ultra-high reliability and low latency (for example, Ultra-Reliable and Low-Latency Communications (URLLC)).

For example, a study is underway in which, in Rel. 16 and subsequent releases, priorities are configured for signals/channels, and communication is controlled based on the priorities configured for each signal/channel. For example, in a case where multiple signals/channels overlap, it is assumed that transmission/reception is controlled based on the priorities of each signal/channel.

On the other hand, there may be a case where multiple UL transmissions, each transmitted on different carriers (or cells, CCs), overlap in a time domain and priorities of the multiple UL transmissions are different. In such a case, it is also assumed that simultaneous transmission of the UL transmissions with different priorities is allowed. Alternatively, depending on UE capabilities, etc., it is also assumed that, even when the multiple UL transmissions with different priorities overlap, a multiplexing/mapping UL signals with different priorities to a given UL channel is allowed. Thus, how to control UL transmissions when the multiple UL transmissions with different priorities are configured/scheduled in the same time domain has not been sufficiently studied.

Therefore, an object of the present disclosure is to provide a terminal, a radio communication method, and a base station that can appropriately control UL transmissions, even when the multiple UL transmissions with different priorities overlap.

### Solution to Problem

A terminal according to an aspect of the present disclosure includes: a receiving section that receives at least one of: first information regarding a configuration of simultaneous transmission of UL transmissions with different priorities; and second information regarding a configuration of multiplexing of UL transmissions with different priorities; and a control section that controls, when multiple UL transmissions with different priorities overlap in a time domain, transmission processing of the multiple UL transmissions based on at least one of the first information and the second information. Advantageous Effects of Invention

According to one aspect of the present disclosure, UL transmissions can be appropriately controlled, even when multiple UL transmissions with different priorities overlap.

### Brief Description of Drawings

[FIG. 1] FIGS. 1A and 1B are diagrams illustrating an example of priority-based UL transmission control.
[FIG. 2] FIG. 2 is diagram illustrating another example of priority-based UL transmission control.
[FIG. 3] FIGS. 3A and 3B are diagrams illustrating an example of tables in which beta offsets are specified.
[FIG. 4] FIG. 4 is a diagram illustrating problems when simultaneous transmission (function A) and multiplexing UL channels with different priorities (function B) are introduced/supported.
[FIG. 5] FIGS. 5A through 5C are diagrams illustrating an example of a UL transmission control according to the present aspect.
[FIG. 6] FIGS. 6A through 6C are diagrams illustrating another example of the UL transmission control according to the present aspect.
[FIG. 7] FIG. 7 is a diagram illustrating an example of a schematic configuration of a radio communication system according to one embodiment.
[FIG. 8] FIG. 8 is a diagram illustrating an example of a configuration of a base station according to one embodiment.
[FIG. 9] FIG. 9 is a diagram illustrating an example of a configuration of a user terminal according to one embodiment.
[FIG. 10] FIG. 10 is a diagram illustrating an example of a hardware configuration of the base station and the user terminal according to one embodiment.

### Description of Embodiments

### <Traffic Type>

Future radio communication systems (for example, NR) are expected to involve traffic types (also referred to as services, service types, communication types, use cases, etc.) such as enhanced mobile broadband (for example, Mobile Broadband (eMBB)), machine-type communications that enables multiple simultaneous connections (for example, massive Machine Type Communications (mMTC), and Internet of Things (IoT)), and highly reliable and low-latency communications (for example, Ultra-Reliable and Low-Latency Communications (URLLC)). For example, in a case of URLLC, a smaller latency and a higher reliability than eMBB are required.

The traffic type may be identified in a physical layer based on at least one of the following:
- Logical channels with different priorities
- Modulation and Coding Scheme (MCS) table (MCS index table)
- Channel Quality Indication (CQI) table
- DCI format
- System Information-Radio Network Temporary Identifier (RNTI) used for scrambling (masking) of Cyclic Redundancy Check (CRC) bit included in (added to) the DCI (DCI format)
- Radio Resource Control (RRC) parameter
- Specific RNTI (for example, RNTI for URLLC, MCS-C-RNTI, etc.)
- Search space
- Given field in the DCI (for example, newly added field or reuse of existing field)

Specifically, a HARQ-ACK traffic type for a PDSCH may be determined based on at least one of the following:
- MCS index table used to determine at least one of the modulation order, target code rate, and transport block size (TBS) of the PDSCH (for example, whether to use MCS index table 3)
- RNTI used for CRC scrambling of DCI used for scheduling the PDSCH (for example, whether CRC scrambled with C-RNTI or MCS-C-RNTI)

In addition, an SR traffic type may be determined based on a higher layer parameter used as an SR identifier (SR-ID). The higher layer parameter may indicate whether the SR traffic type is eMBB or URLLC.

In addition, a CSI traffic type may be determined based on configuration information regarding CSI reports (CSIreportSetting), a DCI type used for triggering, or a DCI transmission parameter, etc. The configuration information, the DCI type, etc. may indicate whether the traffic type of the CSI is either eMBB or URLLC. In addition, the configuration information may be a higher layer parameter.

In addition, a PUSCH traffic type may be determined based on at least one of the following.
- MCS index table used to determine at least one of the modulation order, target code rate, and TBS of the PUSCH (for example, whether or not to use MCS index table 3)
- RNTI used for CRC scrambling of the DCI used for scheduling the PUSCH (for example, whether the CRC is scrambled with C-RNTI or MCS-C-RNTI)

The traffic type may be associated with communication requirements (requirements and required conditions such as latency and error rate), and a data type (voice, data, etc.), etc.

The difference between requirements for URLLC and requirements for eMBB may be that URLLC latency is lower than eMBB latency or that URLLC requirements include reliability requirements.

For example, requirements for eMBB user (U)-plane latency may include that U-plane latency in downlink is 4 ms and that U-plane latency in uplink is 4 ms. Meanwhile, requirements for URLLC U-plane latency may include that the U-plane latency in downlink is 0.5 ms and that the U-plane latency in uplink is 0.5 ms. In addition, requirements for the URLLC reliability may include that a 32-byte error rate is 10-5 for a U-plane latency of 1 ms.

In addition, as enhanced Ultra Reliable and Low Latency Communications (eURLLC), an enhancement of the reliability of traffic mainly for unicast data is studied. Hereinafter, in a case where URLLC and eURLLC are not distinguished, they are simply referred to as URLLC.

### <Priority Configuration>

In NR for Rel. 16 and subsequent releases, a configuration of multiple levels (for example, two levels) of priorities for given signals or channels is being studied. For example, it is assumed that communication is controlled (for example, transmission control in case of collision, etc.) by configuring different priorities for every signal or channel each corresponding to different traffic types (also referred to as "services," "service types," "communication types," "use cases," etc.). This makes it possible to control communication by configuring, for the same signal or channel, different priorities according to the service type, etc.

The priority may be configured for at least one of a signal (for example, UCI such as HARQ-ACK, a reference signal, etc.), a channel (PDSCH, PUSCH, PUCCH, etc.), a reference signal (for example, channel state information (CSI), a sounding reference signal (SRS), etc.), a scheduling request (SR), and a HARQ-ACK codebook. In addition, priorities may be configured for a PUCCH used for SR transmission, a PUCCH used for HARQ-ACK transmission, and a PUCCH used for CSI transmission, respectively.

The priorities may be defined as a first priority (for example, high) and a second priority (for example, low) that is lower than the first priority. Alternatively, three or more priorities may be configured.

For example, priorities may be configured for HARQ-ACK for PDSCH that is dynamically scheduled, HARQ-ACK for semi-persistent PDSCH (SPS PDSCH), and HARQ-ACK for SPS PDSCH release. Alternatively, priorities may be configured for HARQ-ACK codebooks corresponding to the HARQ-ACKs. Note that, in a case where a priority is configured for a PDSCH, a priority of the PDSCH may be interpreted as a priority of the HARQ-ACK for the PDSCH.

In addition, priorities may be configured for a dynamic grant-based PUSCH, a configured grant-based PUSCH, etc.

Information regarding the priority may be notified from a base station to a UE by using at least one of higher layer signalling and DCI. For example, the priority of the scheduling request may be configured by a higher layer parameter (for example, schedulingRequestPriority). The priority of the HARQ-ACK for the PDSCH (for example, dynamic PDSCH) scheduled by DCI may be notified by the DCI. The priority of the HARQ-ACK for the SPS PDSCH may be configured by a higher layer parameter (for example, HARQ-ACK-Codebook-indicator-forSPS), or may be notified by the DCI indicating an activation of the SPS PDSCH. A given priority (for example, low) may be configured for P-CSI/SP-CSI transmitted by a PUCCH. Meanwhile, a priority of A-CSI/SP-CSI transmitted by a PUSCH may be notified using DCI (for example, the trigger DCI or the activation DCI).

The priority of the dynamic grant-based PUSCH may be notified by the DCI for scheduling the PUSCH. The priority of the configured grant-based PUSCH may be configured by a higher layer parameter (for example, priority). A given priority (for example, low) may be configured for the P-SRS/SP-SRS and A-SRS triggered by DCI (for example, DCI format 0_1/DCI format 2_3).

### (Overlap of UL Transmission)

The UE may control UL transmission based on priorities in a case of overlap (or collision) of multiple UL signals/UL channels.

The overlap of multiple UL signals/UL channels may be a case where time resources (or time resources and frequency resources) of the multiple UL signals/UL channels overlap or a case where transmission timings of the multiple UL signals/UL channels overlap. The time resource may be interpreted as time region or time domain. The time resource may be in units of symbols, slots, subslots, or subframes.

An overlap of multiple UL signals/UL channels in the same UE (for example, intra-UE) may mean an overlap between the multiple UL signals/UL channels at least in the same time resource (for example, symbol). Further, a colliding of UL signals/UL channels between different UEs (for example, inter-UEs) may mean an overlap of the multiple UL signals/UL channels in the same time resource (for example, symbol) and frequency resource (for example, RB).

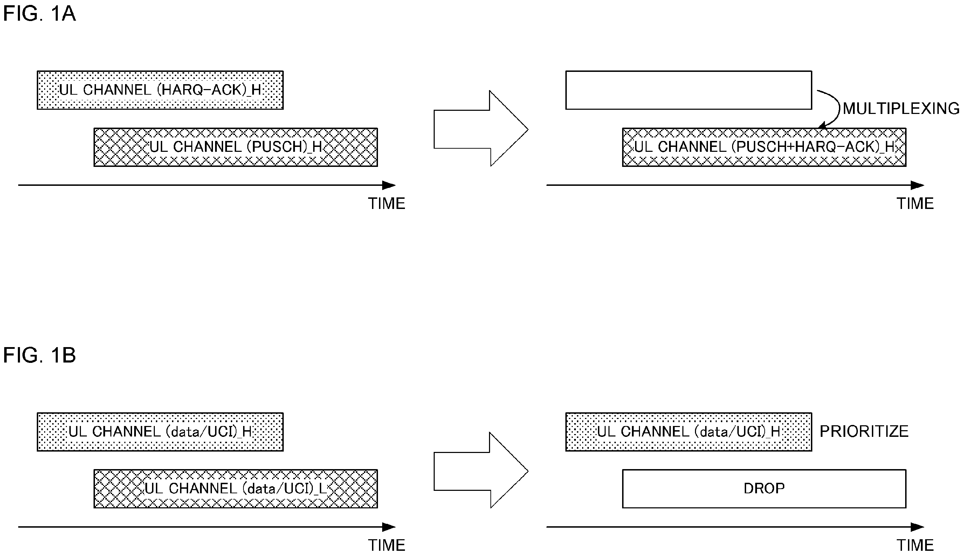

For example, when multiple UL signals/UL channels with the same priority overlap, the UE performs control to multiplex the multiple UL signals/UL channels to one UL channel and transmit the UL signals/UL channels (see FIG. 1A).

FIG. 1A illustrates a case of overlap between HARQ-ACK (or PUCCH for HARQ-ACK transmission) for which first priority (high) is configured, and UL data/UL-SCH (or PUSCH for UL data/UL-SCH transmission) for which the first priority (high) is configured. In this case, the UE multiplexes (or maps) the HARQ-ACK to the PUSCH and transmits both UL data and the HARQ-ACK.

When multiple UL signals/UL channels with different priorities overlap, the UE may perform control such that a UL transmission with high priority is performed (for example, the UL transmission with high priority is prioritized) and a UL transmission with low priority is not performed (is, for example, dropped) (see FIG. 1B).

FIG. 1B illustrates a case of overlap between UL data/HARQ-ACK (or UL channel for UL data/HARQ-ACK transmission) for which first priority (high) is configured, and UL data/HARQ-ACK (or UL channel for UL data/HARQ-ACK transmission) for which second priority (low) is configured. In this case, the UE performs control to drop the UL data/HARQ-ACK with low priority and to prioritize and transmit the UL data/HARQ-ACK with high priority. Note that the UE may change (for example, delay or shift) a transmission timing of the UL transmission with the low priority.

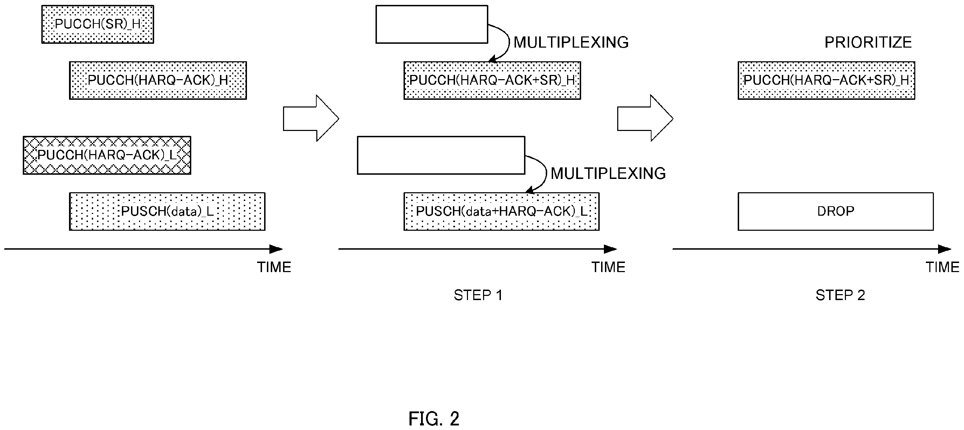

If more than two (or three or more) UL signals/UL channels overlap in the time domain, the transmission may be controlled in two steps (see FIG 2).

In step 1, one UL channel for multiplexing UL signals that are respectively transmitted in UL transmissions with the same priority is selected. In FIG. 2, SR (or PUCCH for SR transmission) and HARQ-ACK (or PUCCH for HARQ-ACK transmission) with first priority (high) may be multiplexed to a given UL channel (here, the PUCCH for HARQ-ACK transmission). Similarly, HARQ-ACK (or PUCCH for HARQ-ACK transmission) and data (or PUSCH for data/UL-SCH transmission) with second priority (low) may be multiplexed to a given UL channel (here, the PUSCH).

In step2, control may be performed such, between UL transmissions with different priorities, the UL transmission with high priority is prioritized and transmitted and the UL transmission with low priority is dropped. In FIG. 2, the SR and the PUCCH for the HARQ-ACK transmission with first priority (high) may be prioritized and transmitted, and the HARQ-ACK and the PUSCH for data transmission with second priority (low) may be dropped.

In this way, the UE can resolve collision between multiple UL transmissions with the same priority according to step 1 and resolve collision between multiple UL transmissions with different priorities according to step 2. Note that, FIG. 2 illustrates multiplexing processing between UL transmissions with the same priority in step 1, but the present disclosure is not limited to this. For example, in step 1, multiplexing processing may be performed first for UL transmissions with low priority (for example, second priority) among the overlapping multiple UL transmissions and multiplexing for UL transmissions with high priority (for example, first priority) may be performed after step 2 (for example, multiplexing for UL transmissions with different priority).

### <Beta Offset>

When the UE transmits UCI (for example, UCI on PUSCH) using PUSCH, the UE may determine a coding rate of the UCI transmitted using PUSCH based on the amount of resources used to transmit the UCI (for example, the number of resource elements (REs)), the number of UCI bits and the modulation order. So, the UE may determine the amount of resources (for example, number of REs) for the UCI. The UE may receive the information used to determine the amount of resources (also referred to as UCI resource-related information, beta offset, β_{offset}, etc.) and determine the amount of resources for the UCI to be transmitted on the PUSCH based on the beta offset. In addition, a transmit power of the PUSCH including UCI may be determined based on the beta offset value.

Parameters for UCI on PUSCH may configure for the UE a semi-static or dynamic beta offset for UCI on PUSCH.

When the semi-static beta offset is used, one parameter to determine the number of REs for the UCI (beta offset value) is configured by an RRC signalling. When the dynamic beta offset is used, multiple parameters to determine the number of REs for the UCI (multiple candidates for beta offset values) are configured by the RRC signalling, and one of the multiple parameters is dynamically selected by the DCI.

Beta offsets may be configured separately for UCIs with different communication requirements (for example, UCI for eMBB and UCI for URLLC).

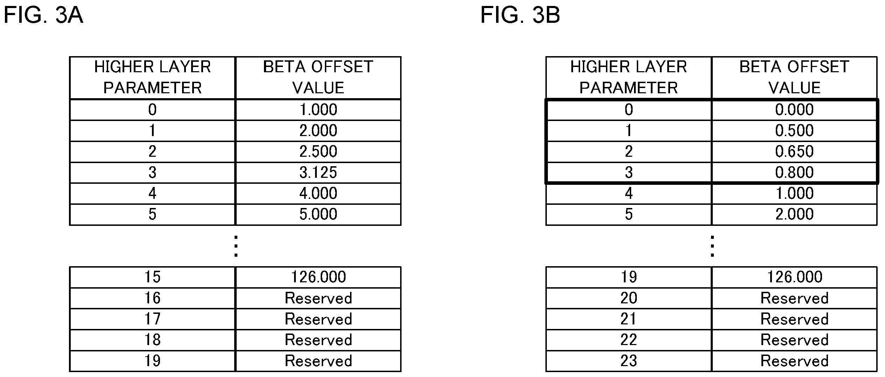

FIGS. 3A and 3B are diagrams illustrating an example of tables regarding beta offsets. FIG. 3A corresponds to a table used in existing systems (for example, Rel. 15 or before). For Rel. 16/17 and subsequent releases, supporting of values smaller than 1 as the beta offset value is also studied (see FIG. 3B). For example, FIG. 3B may be configured in certain cases (for example, cases where UCI with low priority is multiplexed with PUSCH with high priority as described below).

### <Simultaneous Transmission/Multiplexing of UL Transmissions with Different Priorities>

Meanwhile, there may be a case where multiple UL transmissions, each transmitted on different carriers (or cells, CCs), overlap in a time domain and the priorities of the multiple UL transmissions are different.

For example, if UL channels/UL signals are scheduled on different carriers in inter-cells supported by different radio frequencies (RFs), transmitting each UL channel/UL signal may be useful in terms of low latency and spectral efficiency. If the UE supports RF processing for different carriers (CCs) respectively, resource utilization efficiency and low latency may be improved by transmitting the UL channel/UL signal on each carrier.

For example, it may be supported that, for each UE supporting functionality of carrier aggregation between bands (for example, interband CA), simultaneous transmission of PUCCH/PUSCH with different priorities (for example, PHY priorities) in different cells is configured in the same PUCCH group by an RRC.

Alternatively, it may be supported that the UL transmissions with different priorities are multiplexed (for example, transmitted by using the same UL channel), such as when multiple UL transmissions with different priorities are scheduled intra-cell/inter-cell. For example, multiple UL transmissions may be supported by multiplexing a UL transmission with certain priority onto a UL channel for a UL transmission with other priority.

When a HARQ-ACK with low priority (for example, LP PUSCH) is multiplexed with a PUSCH with high priority (for example, HP PUSCH), the beta offset may be supported to meet given conditions. The given conditions may be, for example, 0 < beta offset < 1.

Whether or not to multiplex/map (for example, enable/disable or activate/deactivate) a UCI (for example, HARQ-ACK) to a UL channel (for example, PUSCH) with a different priority than that of UCI may be configured by a higher layer signalling.

For enabling/disabling (for example, to enable/disable or activate/deactivate) multiplexing/mapping of PUCCH (or UCI) to PUSCH with different priority, a method in which dedicated RRC parameter is notified/configured (Method 1), or a method in which a given value is configured as beta offset (Method 2) may be supported. For example, when 0 is configured as the beta offset, disabling (for example, disable/deactivate) multiplexing/mapping of PUCCH (or UCI) to PUSCH with different priority may be indicated.

When the simultaneous transmission of the UL transmissions with different priorities (for example, PUCCH/PUSCH) (for example, function A) and the multiplexing/mapping of the UL transmissions with different priorities (for example, function B) are supported as described above, how to control the UE behaviour in the UL transmissions becomes a problem.

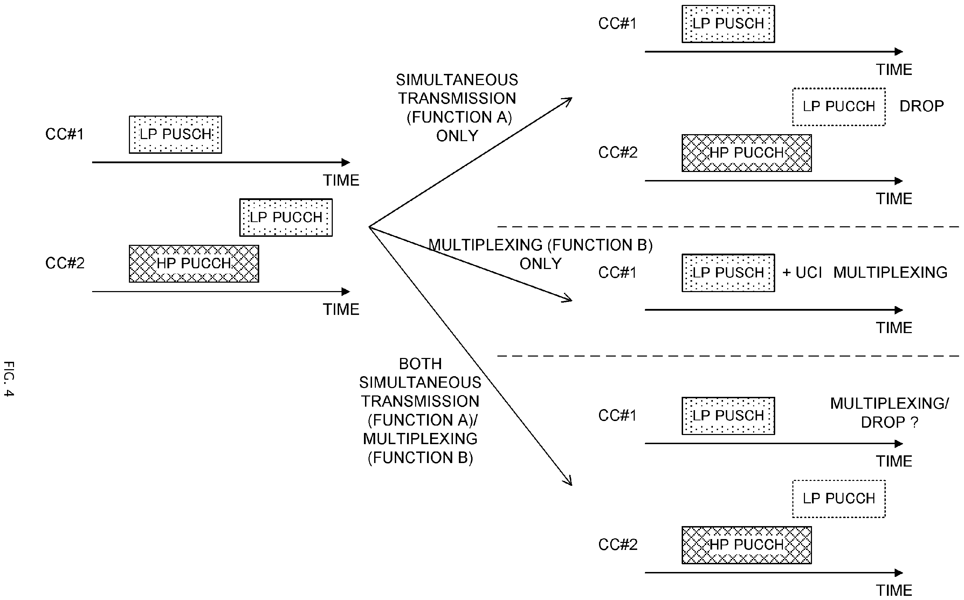

For example, when higher layer parameter for configuring enabling/disabling of the simultaneous transmission of the UL transmissions with different priorities (function A) and higher layer parameter for configuring enabling/disabling of the multiplexing of the UCI and the PUSCH with different priorities (function B) are supported, how to control the configuration by the higher layer becomes a problem (see FIG.4).

FIG. 4 illustrates a case where a PUSCH with second priority (for example, LP PUSCH) transmitted on CC #1 overlaps with a PUCCH with first priority (for example, HP PUCCH) transmitted on CC #2, and the PUCCH transmitted on the CC#2 overlaps with a PUCCH with second priority (for example, LP PUCCH) transmitted on the CC#2.

In this case, whether both functions (for example, the function A and the function B) may be configured simultaneously by the higher layers becomes a problem.

If the simultaneous configuration of both functions is allowed, how to control the UE behaviour in the UL transmission becomes a problem.

In addition, if the simultaneous configuration of both functions is allowed and both functions are performed, how to control the multiplexing and the simultaneous transmission of the PUCCH(UCI)/PUSCH becomes a problem.

The present inventors have focused on the case where the simultaneous transmission of the UL transmissions with different priorities (for example, PUCCH/PUSCH) (for example, function A) and the multiplexing/mapping of UL the transmissions with different priorities (for example, function B) are introduced, and have studied the UE behaviour in such a case to conceive of an aspect of the present embodiment.

Hereinafter, embodiments according to the present disclosure will be described in detail with reference to the drawings. The configurations described in each of the aspects may each be employed individually or may be employed in combination.

In the present disclosure, "A/B," "at least one of A and B" may be interchangeably interpreted. "At least one of A and B" may be interpreted as "A and B." Similarly, in the present disclosure, "A/B/C," "at least one of A, B and C" may be interchangeably interpreted. "At least one of A, B and C" may be interpreted as "A and B," "A and C" or "B and C."

In the present disclosure, the higher layer signalling may be, for example, any one of or a combination of RRC (Radio Resource Control) signalling, MAC (Medium Access Control) signalling, broadcast information, etc.

The MAC signalling may use, for example, a MAC control element (MAC CE), a MAC PDU (Protocol Data Unit), etc. The broadcast information may be, for example, a master information block (MIB), a system information block (SIB), minimum system information (RMSI (Remaining Minimum System Information)), other system information (OSI), etc.

In the following description, two levels, namely, first priority (high) and second priority (low) will be described as examples of priorities in UL transmission, however, the priorities are not limited to the two levels. Priorities at three or more levels may also be configured.

In the present disclosure, UL transmission, UL channel, and UL signal may be interchangeably interpreted. In the present disclosure, carrier, cell, CC, BWP, and band may be interchangeably interpreted. In addition, in the present disclosure, "transmitted" may be interpreted as "scheduled," "configured," or "allocated."

In the following description, PUSCH may be interpreted as PUSCH transmission, PUSCH resources, PUSCH allocation, or PUSCH occasions. Similarly, PUCCH may be interpreted as PUCCH transmission, PUCCH resources, PUCCH allocation, or PUCCH occasions.

### (First Aspect)

In a first aspect, a case where the simultaneous transmission of the PUCCH/PUSCH (function A) on different carriers (for example, cells/CCs) and the multiplexing of the UL transmissions (for example, UL channels) with different priorities (function B) are not configured simultaneously will be described. The case where the function A and the function B are not configured simultaneously may be a case where the function A and the function B are not enabled or activated simultaneously.

When the function A and the function B are each enabled by separate higher layer parameters, it is controlled, if one is enabled, to not enable (for example, to disable or deactivate) the other.

The UE may not assume that both the function A and the function B are enabled simultaneously by higher layer parameter. In this case, the UE may assume that if one function of the function A and the function B is configured (for example, enabled), the other function is not configured (not enabled). Alternatively, the UE may control to report only UE capability information that the UE corresponds to either the function A or the function B.

Thus, by controlling to configurate (for example, enable) the UE with only one of the function A and the function B, it is possible to appropriately control the UL transmission, even when the multiple UL transmissions with different priorities overlap in a communication system where both the function A and the function B are introduced/supported.

### (Second Aspect)

In a second aspect, a case where the simultaneous transmission of the PUCCH/PUSCH (function A) on different carriers (for example, cells/CCs) and the multiplexing of the UL transmissions (for example, UL channels) with different priorities (function B) may be configured simultaneously will be described.

A network (for example, a base station) may configure the UE to enable/disable the function A using first higher layer parameter and enable/disable the function B using second higher layer parameter. In other words, the case where both the function A and the function B are enabled for the UE simultaneously may be allowed/supported.

The second higher layer parameter may be an RRC parameter (for example, dedicated RRC parameter) to directly configure the multiplexing of the UL transmissions/UL channels with different priorities.

Alternatively, a value of another parameter (for example, beta offset) may be used as the second higher layer parameter. For example, it may be indicated that the function B is disabled (or not enabled) when the first beta offset value (for example, 0) is configured/notified, and that the function B is enabled when other values (for example, 0 < beta offset < 1, or beta offset ≥ 1) are notified. Note that, the multiplexing of the UL transmissions/UL channels with different priorities configured based on the beta offset value may be referred to as function C. In the following description, the function B may be interpreted as the function C.

If the case where both the function A (hereafter also referred to as the simultaneous transmission) and the function B (hereafter also referred to as the multiplexing with different priorities) are enabled simultaneously is allowed/supported, the UE may control the UL transmission based on at least one of the following options 2-1 through 2-3.

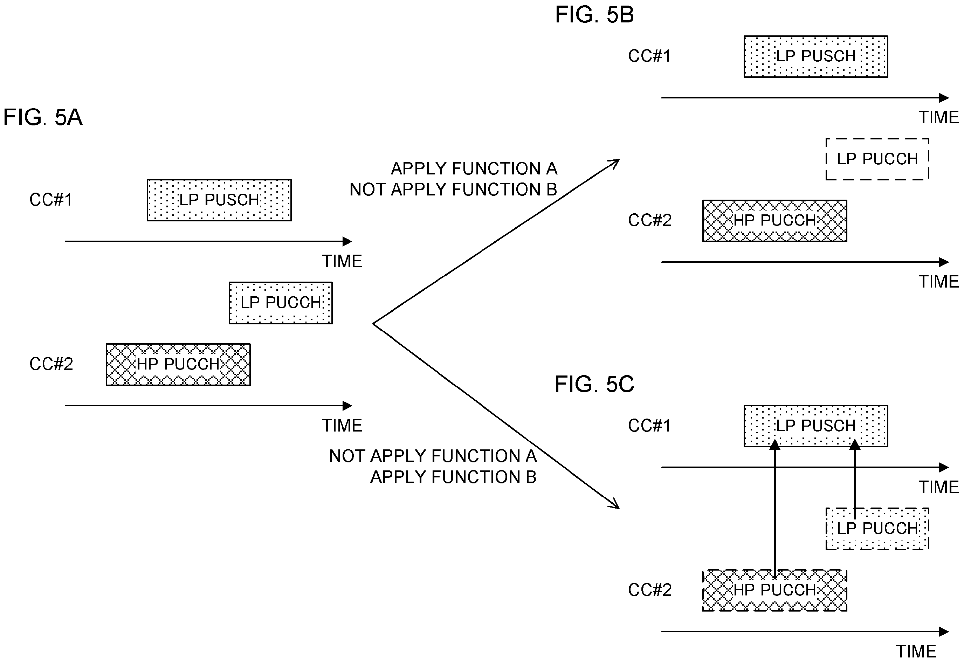

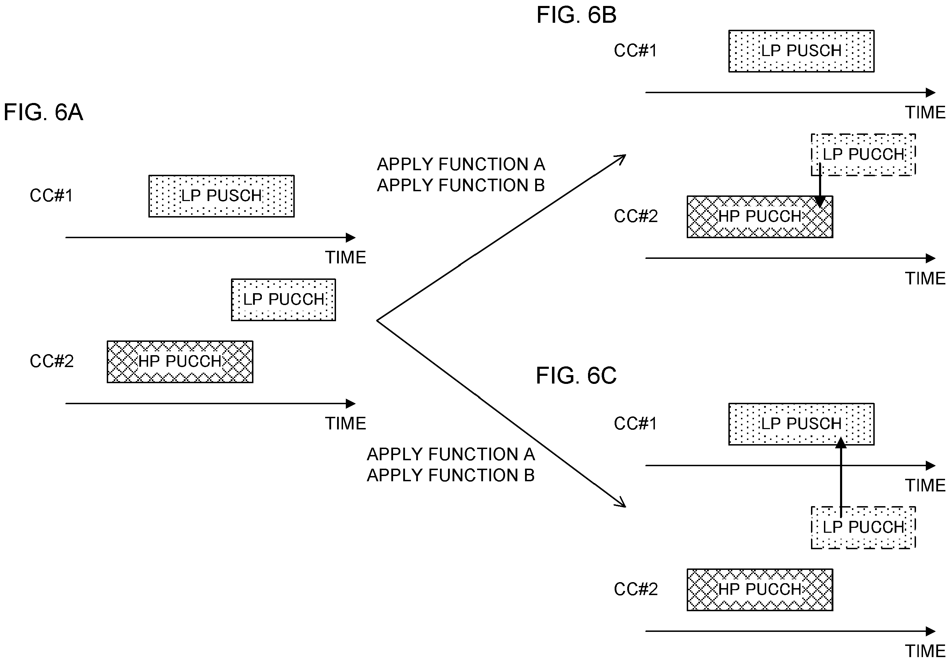

In the following description, a case where a PUSCH with second priority (low) scheduled/configured for CC #1, a PUCCH with first priority (high) scheduled/configured for CC #2, and a PUCCH with second priority (low) scheduled/configured for CC #2 are overlap (see FIG. 5A and FIG. 6A) will be described as an example.

### <Option 2-1>

When both the function A and the function B are enabled simultaneously, the UE may control to apply the simultaneous transmission (function A) and to not apply the multiplexing with different priorities (function B) (see FIG. 5B).

When multiple UL transmissions with different priorities are scheduled/configured to overlap between different carriers, the UE may control to transmit the UL transmissions on each carrier respectively. In FIG. 5B, a LP PUSCH for CC #1 and a HP PUCCH for CC #2 have different priorities but are scheduled/configured on different carriers, so that the UE may control to transmit both the LP PUSCH for CC #1 and the HP PUCCH for CC #2.

On the other hand, a LP PUSCH for CC #2 and the HP PUCCH for CC #2 have different priorities within the same carrier, so that the UE may control to not transmit (for example, drop) the UL signal/UL channel with low priority (in this case, the LP PUCCH).

Thus, it is controlled to apply only the function A when both the function A and the function B are configured (for example, enabled) for the UE. This makes it possible to appropriately control the UL transmission even when the multiple UL transmissions with different priorities overlap in a case where both the function A and the function B are configured (for example, enabled). In addition, the multiplexing processing of the UL signal to other channel can be made unnecessary, by performing the simultaneous transmission by using each UL channels for different carriers.

### <Option 2-2>

When both the function A and the function B are enabled simultaneously, the UE may control to apply the multiplexing with different priorities (function B) and to not apply the simultaneous transmission (function A) (see FIG. 5C).

When multiple UL transmissions with different priorities are scheduled/configured to overlap within the same carrier/between different carriers, the UE may control to multiplex UL signal to given UL transmission (or UL channel). FIG. 5C illustrates a case where the multiplexing/mapping of HP PUCCH for CC #2 (or UCI to be transmitted on the HP PUCCH) and LP PUCCH for CC #2 (or UCI to be transmitted on the LP PUCCH) to LP PUSCH for CC #1.

A given UL channel to multiplex other UL transmissions may be determined based on at least one of the channel type/classification, priority, and carrier for the transmission. For example, when a PUSCH and a PUCCH overlap, it may be controlled to multiplex the PUCCH (or UCI to be transmitted on the PUCCH) to the PUSCH, regardless of priority.

In addition, when PUCCHs with different priorities overlap (a PUSCH and a PUCCH do not overlap), it may be controlled to multiplex a PUCCH with low priority (or UCI scheduled to be transmitted on the PUCCH with low priority) to a PUCCH with high priority. Alternatively, when PUCCHs with different priorities overlap, it may be controlled to drop a PUCCH with low priority (or UCI scheduled to be transmitted on the PUCCH with low priority).

Thus, it is controlled to apply only the function B when both the function A and the function B are configured (for example, enabled) for the UE. This makes it possible to appropriately control the UL transmission even when the multiple UL transmissions with different priorities overlap in a case where both the function A and the function B are configured (for example, enabled). In addition, single carrier characteristics can be obtained by aggregating and transmitting UL signals on a given UL channel.

### <Option 2-3>

When both the function A and the function B are enabled simultaneously, the UE may control to apply both the simultaneous transmission (function A) and the multiplexing with different priorities (function B).

In this case, the UE may control to apply one of the functions first and then apply the other function. For example, the UE may control to perform the multiplexing with different priorities (function B) and then perform the simultaneous transmission (function A) (see FIGS. 6B and 6C).

When multiple UL transmissions with different priorities are scheduled/configured to overlap within the same carrier/between different carriers, the UE may perform a multiplexing processing by selecting a UL channel on each carrier respectively, and then perform a simultaneous transmission of the selected UL transmission/UL channel on each carrier.

For example, the UE may select one UL channel (here, HP PUCCH) among multiple overlapping UL channels within the same carrier (CC #2 in FIG. 6B and FIG. 6C) and multiplex the UL signal of another UL channel (here, LP PUCCH) to another UL channel. And then, the UE may perform the simultaneous transmission of LP PUSCH for CC #1 and HP PUCCH for CC #2.

The multiplexing/mapping processing may be determined based on at least of the channel type/classification, priority, and carrier (CC) for the transmission. For example, the multiplexing/mapping processing may be controlled to be performed per CC/priority and to perform simultaneous transmission of PUCCH/PUSCH overlapped finally on the different CCs.

For example, the multiplexing/mapping processing may be configured to prioritize a multiplexing/mapping between UL transmissions/UL channels scheduled/configured on the same carrier (see FIG. 6B). In this case, a multiplexing/mapping between different priorities within the same carrier may be allowed. Alternatively, the multiplexing/mapping processing may be configured to prioritize a multiplexing/mapping between the same priority (see FIG. 6C). Alternatively, the multiplexing/mapping processing may be configured to prioritize multiplexing/mapping between different priorities (see FIG. 6B).

In addition, a UL transmission multiplexed/mapped to the other UL channel may be restricted to UL transmission overlapped within the same carrier.

### <Variations>

When both the function A and the function B are enabled simultaneously, the UE may control first to perform the simultaneous transmission (function A) and then to perform the multiplexing with different priorities (function B). For example, after processing based on the simultaneous transmission (function A), the multiplexing/mapping may be performed, if non-overlapping UL channels are present.

### <Selection/Determination of Options to Apply>

It may be defined by the specifications which of the above options 2-1 through 2-3 may be applied by the UE.

Alternatively, the UE may switch between options 2-1 to 2-2 (or options 2-1 through 2-3) (or select a specific option) based on a given condition/given notification and apply it.

The given condition may be a power of the UL transmission (for example, UL TX power). For example, the UE may apply the option 2-2 when the transmit power is limited and may apply the option 2-1 otherwise. The limitation of the transmit power (for example, power limited) may mean that the UE reaches its maximum power (for example, P_{CMAX}) limit. An allocation of the transmit power between different CCs/between each channel (for example, TX power allocation) may be determined by a transmit power allocation mechanism of existing systems (for example, Rel. 15/16 and earlier releases).

Alternatively, the given condition may be a payload size of the UL transmission. For example, the option 2-2 may be applied, when the payload size of the given UL transmission (LP PUCCH/LP PUSCH) is smaller than a given value, and the option 2-1 may be applied otherwise.

Alternatively, the base station may notify the UE which option to be applied, using downlink control information (or parameters associated with the downlink control information), etc. transmitted from the base station to the UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

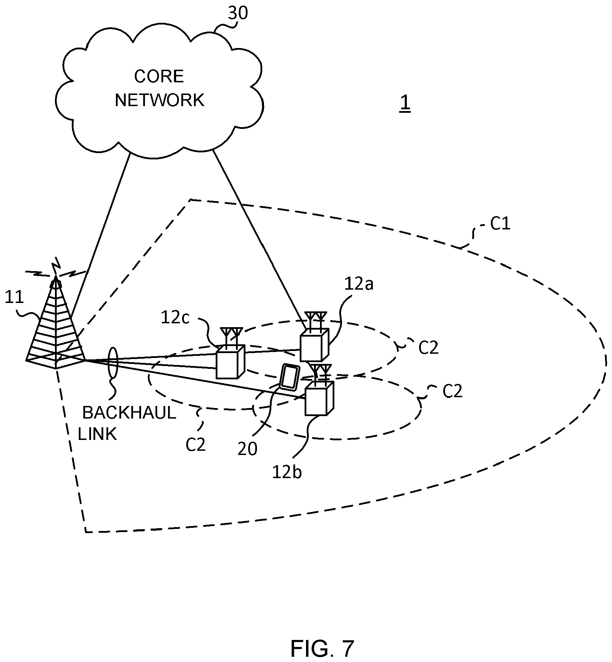

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) , etc. the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, etc.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, etc. of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions, etc. of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations (for example, RRHs) 10 may be connected by a wired connection (for example, optical fiber in compliance with the Common Public Radio Interface (CPRI), the X2 interface, etc.) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), etc.

The user terminal 20 may be a terminal supporting at least one of communication schemes such as LTE, LTE-A, 5G, etc.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), etc. may be used.

The wireless access scheme may be referred to as a "waveform". Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)), etc., may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)), etc. may be used as uplink channels.

User data, higher layer control information, System Information Blocks (SIBs), etc. are transmitted on the PDSCH. User data, higher layer control information, etc. may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment", "DL DCI," etc., and DCI for scheduling the PUSCH may be referred to as "UL grant," "UL DCI," etc. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set". Note that a "search space," a "search space set," a "search space configuration," a "search space set configuration," a "CORESET," a "CORESET configuration," etc. of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, etc.), and scheduling request (SR) may be transmitted by means of the PUCCH. By means of the PRACH, random access preambles for establishing connections with cells may be transmitted.

Note that the downlink, the uplink, etc. in the present disclosure may be expressed without a term of "link". In addition, various channels may be expressed without adding "Physical" to the head.

In the radio communication system 1, a synchronization signal (SS), a downlink reference signal (DL-RS), etc. may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), etc. may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," etc. Note that an SS, an SSB, etc. may be also referred to as a "reference signal".

In the radio communication system 1, a sounding reference signal (SRS), a demodulation reference signal (DMRS), etc. may be transmitted as an uplink reference signal (UL-RS). Note that DMRS may be referred to as a "user terminal specific reference signal (UE-specific Reference Signal)."

### (Base Station)

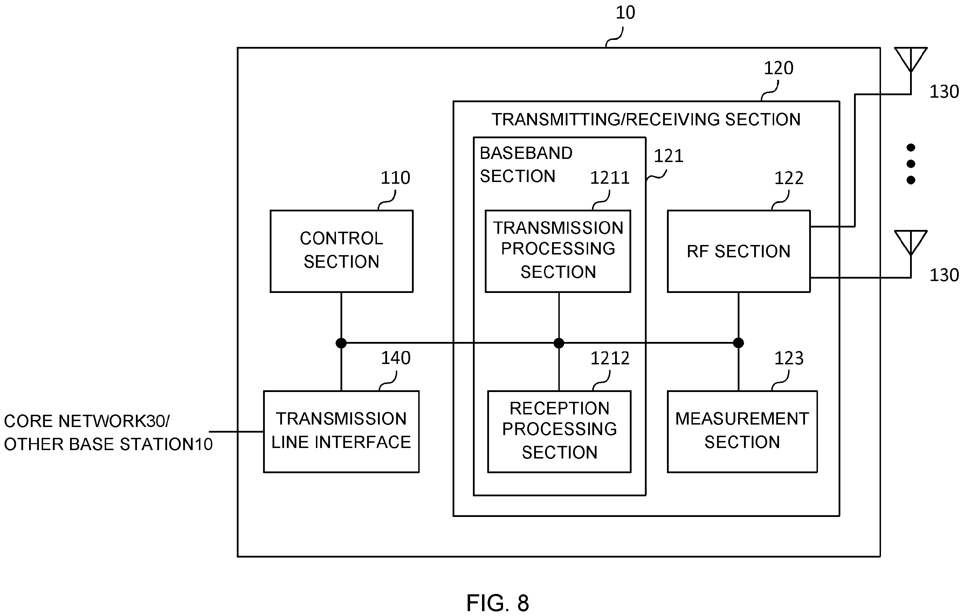

FIG. 8 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, etc. described based on general understanding of the technical field to which the present disclosure pertains.

The control section 110 may control generation of signals, scheduling (for example, resource allocation, mapping), etc. The control section 110 may control transmission and reception, measurement, etc. using the transmitting/receiving section 120, the transmitting/receiving antennas 130, and the transmission line interface 140. The control section 110 may generate data, control information, a sequence, etc. to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, etc. described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, etc. described based on general understanding of the technical field to which the present disclosure pertains.

The transmitting/receiving section 120 may transmit the above-described downlink channel, synchronization signal, downlink reference signal, etc. The transmitting/receiving section 120 may receive the above-described uplink channel, uplink reference signal, etc.

The transmitting/receiving section 120 may form at least one of a transmit beam and a receive beam by using digital beam forming (for example, precoding), analog beam forming (for example, phase rotation), etc.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), etc., for example, on data and control information, etc. acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, etc., on the bit string to transmit, and output a baseband signal.

The transmitting/receiving section 120 (RF section 122) may perform modulation to a radio frequency band, filtering, amplification, etc., on the baseband signal, and transmit the signal of the radio frequency band through the transmitting/receiving antennas 130.

On the other hand, the transmitting/receiving section 120 (RF section 122) may perform amplification, filtering, demodulation to a baseband signal, etc., on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, etc., on the acquired baseband signal, and acquire user data, etc.

The transmitting/receiving section 120 (measurement section 123) may perform the measurement related to the received signal. For example, the measurement section 123 may perform Radio Resource Management (RRM) measurement, Channel State Information (CSI) measurement, etc., based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), etc. The measurement results may be output to the control section 110.

The transmission line interface 140 may perform transmission/reception (backhaul signalling) of a signal with an apparatus included in the core network 30 or other base stations 10, etc., and acquire or transmit user data (user plane data), control plane data, etc. for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit at least one of: first information regarding a configuration of the simultaneous transmission of the UL transmissions with different priorities; and second information regarding a configuration of the multiplexing of the UL transmissions with different priorities.

The control section 110 may control, when the multiple UL transmissions with different priorities overlap in time domain, reception of the UL transmissions to which transmission processing is performed based on at least one of the first information and the second information.

### (User Terminal)

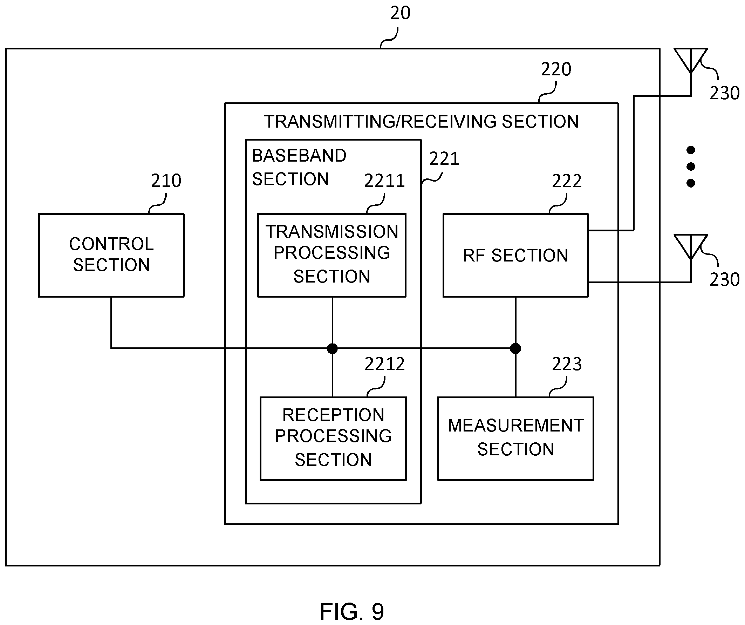

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, etc. described based on general understanding of the technical field to which the present disclosure pertains.

The control section 210 may control generation of signals, mapping, etc. The control section 210 may control transmission/reception, measurement, etc. using the transmitting/receiving section 220, and the transmitting/receiving antennas 230. The control section 210 generates data, control information, a sequence, etc. to transmit as a signal and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, etc. described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, etc. described based on general understanding of the technical field to which the present disclosure pertains.

The transmitting/receiving section 220 may receive the above-described downlink channel, synchronization signal, downlink reference signal, etc. The transmitting/receiving section 220 may transmit the above-described uplink channel, uplink reference signal, etc.

The transmitting/receiving section 220 may form at least one of a transmit beam and a receive beam by using digital beam forming (for example, precoding), analog beam forming (for example, phase rotation), etc.

The transmitting/receiving section 220 (transmission processing section 2211) may perform the processing of the PDCP layer, the processing of the RLC layer (for example, RLC retransmission control), the processing of the MAC layer (for example, HARQ retransmission control), etc., for example, on data and control information etc. acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, etc., on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, etc., on the baseband signal, and transmit the signal of the radio frequency band through the transmitting/receiving antennas 230.

On the other hand, the transmitting/receiving section 220 (RF section 222) may perform amplification, filtering, demodulation to a baseband signal, etc., on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, etc., on the acquired baseband signal, and acquire user data, etc.

The transmitting/receiving section 220 (measurement section 223) may perform the measurement related to the received signal. For example, the measurement section 223 may perform RRM measurement, CSI measurement, etc., based on the received signal. The measurement section 223 may measure a received power (for example, RSRP), a received quality (for example, RSRQ, SINR, SNR), a signal strength (for example, RSSI), channel information (for example, CSI), etc. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of: first information regarding a configuration of the simultaneous transmission of the UL transmissions with different priorities; and second information regarding a configuration of the multiplexing of the UL transmissions with different priorities.

The control section 210 may control, when multiple UL transmissions with different priorities overlap in time domain, transmission processing of the UL transmissions based on at least one of the first information and the second information.

It may be controlled to not configure the simultaneous transmission of the UL transmissions with different priorities and the multiplexing of the UL transmissions with different priorities simultaneously.

When the simultaneous transmission of the UL transmissions with different priorities and the multiplexing of the UL transmissions with different priorities are configured simultaneously, control section 210 may control to apply one of the simultaneous transmission of the UL transmissions with different priorities and the multiplexing of the UL transmissions with different priorities and to not apply the other.

When the simultaneous transmission of the UL transmissions with the different priorities and the multiplexing of the UL transmissions with the different priorities are configured simultaneously, the control section 210 may control to perform an operation regarding the simultaneous transmission of the UL transmissions with the different priorities after performing an operation regarding the multiplexing of the UL transmissions with the different priorities.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, etc.) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, etc., but function are by no means limited to these. For example, functional block (components) to implement a function of transmission may be referred to as a "transmitting section (transmitting unit)," a "transmitter," etc. The method for implementing each component is not particularly limited as described above.

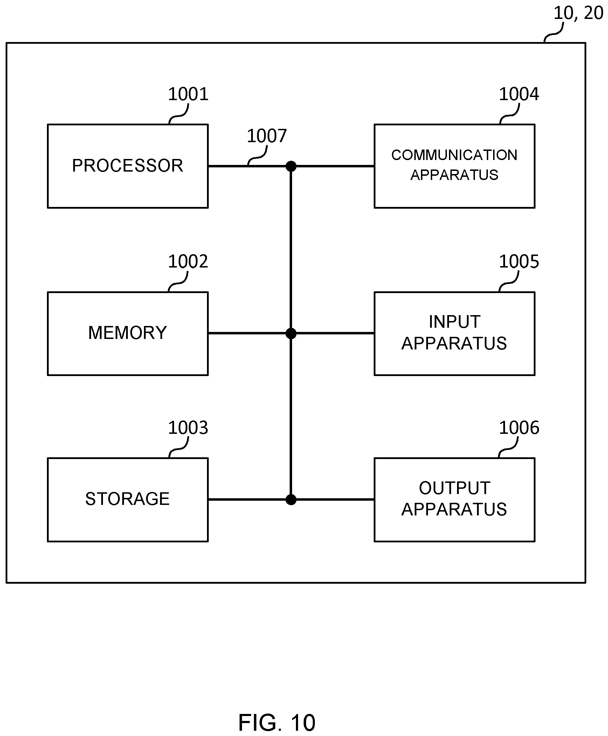

For example, a base station, a user terminal, etc. according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, etc.

Note that in the present disclosure, the words such as an apparatus, a circuit, a device, a section, a unit, etc. can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented simultaneously, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, etc. For example, at least part of the above-described control section 110 (210), the transmitting/receiving section 120 (220), etc. may be implemented by the processor 1001.

Furthermore, the processor 1001 reads programs (program codes), software modules, data, etc. from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" etc. The memory 1002 can store executable programs (program codes), software modules, etc. for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) etc.), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," etc. The communication apparatus 1004 may be configured to include a high frequency switch, a duplexer, a filter, a frequency synthesizer, etc. in order to realize, for example, at least one of frequency division duplex (FDD) and time division duplex (TDD). For example, the above-described transmitting/receiving section 120 (220), the transmitting/receiving antennas 130 (230), etc. may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, etc.). The output apparatus 1006 is an output device that allows sending output to the outside (for example, a display, a speaker, a Light Emitting Diode (LED) lamp, etc.). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), etc., and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signalling) may be interchangeably interpreted. Also, "signals" may be "messages". A reference signal may be abbreviated as an "RS," and may be referred to as a "pilot," a "pilot signal," etc., depending on which standard applies. Furthermore, a "component carrier (CC)" may be referred to as a "cell," a "frequency carrier," a "carrier frequency" etc.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, etc.

A slot may be constituted of one or a plurality of symbols in the time domain (Orthogonal Frequency Division Multiplexing (OFDM) symbols, Single Carrier Frequency Division Multiple Access (SC-FDMA) symbols, etc.). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI". That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," etc. instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, etc. Note that, when TTIs are given, the time interval (for example, the number of symbols) to which transport blocks, code blocks, codewords, etc. are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel.12), a "long TTI," a "normal subframe," a "long subframe," a "slot," etc. A TTI that is shorter than a normal TTI may be referred to as a "shortened TTI," a "short TTI," a "partial or fractional TTI," a "shortened subframe," a "short subframe," a "mini-slot," a "sub-slot," a "slot," etc.

Note that a long TTI (for example, a normal TTI, a subframe, etc.) may be interpreted as a TTI having a time length exceeding 1 ms, and a short TTI (for example, a shortened TTI, etc.) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, etc. each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair," etc.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," etc.) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," etc. in the present disclosure may be interpreted as a "BWP".

Note that the above-described structures of radio frames, subframes, slots, mini-slots, symbols, etc. are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, etc. can be variously changed.

Also, the information, parameters, etc. described in the present disclosure may be represented in absolute values or in relative values with respect to given values, or may be represented in another corresponding information. For example, radio resources may be indicated by given indices.

Furthermore, mathematical expressions that use these parameters, etc. may be different from those expressly disclosed in the present disclosure. Furthermore, mathematical expressions that use these parameters, etc. may be different from those expressly disclosed in the present disclosure. For example, since various channels (PUCCH, PDCCH, etc.) and information elements can be identified by any suitable names, the various names allocated to these various channels and information elements are in no respect limiting.

The information, signals, etc. described in the present disclosure may be represented by using any of a variety of different technologies. For example, data, instructions, commands, information, signals, bits, symbols, chips, etc., all of which may be referenced throughout the herein-contained description, may be represented by voltages, currents, electromagnetic waves, magnetic fields or particles, optical fields or photons, or any combination of these.

Also, information, signals, etc. can be output in at least one of from higher layers to lower layers and from lower layers to higher layers. Information, signals, etc. may be input and/or output via a plurality of network nodes.

The information, signals, etc. that are input and/or output may be stored in a specific location (for example, a memory) or may be managed by using a management table. The information, signals, etc. to be input and/or output can be overwritten, updated, or appended. The information, signals, etc. that are output may be deleted. The information, signals, etc. that are input may be transmitted to another apparatus.

Reporting of information is by no means limited to the aspects/embodiments described in the present disclosure, and other methods may be used as well. For example, reporting of information in the present disclosure may be implemented by using physical layer signalling (for example, downlink control information (DCI), uplink control information (UCI), higher layer signalling (for example, Radio Resource Control (RRC) signalling, broadcast information (master information block (MIB), system information blocks (SIBs), etc.), Medium Access Control (MAC) signalling, etc.), and other signals or combinations of these.

Note that physical layer signalling may be referred to as "Layer 1/Layer 2 (L1/L2) control information (L1/L2 control signals)," "L1 control information (L1 control signal)," etc. Also, RRC signalling may be referred to as an "RRC message," and can be, for example, an RRC connection setup message, an RRC connection reconfiguration message, etc. Also, MAC signalling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, etc.

Also, software, commands, information, etc. may be transmitted and received via communication media. For example, when software is transmitted from a website, a server, or other remote sources by using at least one of wired technologies (coaxial cables, optical fiber cables, twisted-pair cables, digital subscriber lines (DSL), etc.) and wireless technologies (infrared radiation, microwaves, etc.), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," etc. can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," etc. can be used interchangeably. The base station may be referred to as the terms such as a "macro cell," a small cell," a "femto cell," a "pico cell," etc.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," etc. Note that at least one of a base station and a mobile station may be device mounted on a moving object or a moving object itself, etc. The moving object may be a vehicle (for example, a car, an airplane, etc.), may be a moving object which moves unmanned (for example, a drone, an automatic operation car, etc.), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, etc.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," etc.). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel etc. may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), etc. may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, etc. that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, etc.) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," etc. as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, etc.

Furthermore, "judging (determining)" may be interpreted to mean making "judgments (determinations)" about receiving (for example, receiving information), transmitting (for example, transmitting information), input, output, accessing (for example, accessing data in a memory), etc.

In addition, "judging (determining)" as used herein may be interpreted to mean making "judgments (determinations)" about resolving, selecting, choosing, establishing, comparing, etc. In other words, "judging (determining)" may be interpreted to mean making "judgments (determinations)" about some action.

In addition, "judging (determining)" may be interpreted as "assuming," "expecting," "considering," etc.

The "maximum transmit power" described in the present disclosure may mean the maximum value of the transmit power, the nominal UE maximum transmit power, or the rated UE maximum transmit power.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, etc.

In the present disclosure, the phrase "A and B are different" may mean that "A and B are different from each other". Note that the phrase may mean that "A and B is each different from C". The terms "separate," "be coupled," etc. may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2021-016555 filed on February 4, 2021. The entire contents of the application are incorporated herein by reference.

## Claims

1. A terminal comprising:
a receiving section that receives at least one of: first information regarding a configuration of simultaneous transmission of UL transmissions with different priorities; and second information regarding a configuration of multiplexing of UL transmissions with different priorities; and
a control section that controls, when multiple UL transmissions with different priorities overlap in a time domain, transmission processing of the multiple UL transmissions based on at least one of the first information and the second information.

2. The terminal according to claim 1, wherein
the simultaneous transmission of the UL transmissions with the different priorities and the multiplexing of the UL transmissions with the different priorities are not configured simultaneously.

3. The terminal according to claim 1, wherein
when the simultaneous transmission of the UL transmissions with the different priorities and the multiplexing the UL transmissions with the different priorities are configured simultaneously, the control section controls to apply one of the simultaneous transmission of the UL transmissions with the different priorities and the multiplexing of the UL transmissions with the different priorities and to not apply the other.

4. The terminal according to claim 1, wherein
when the simultaneous transmission of the UL transmissions with the different priorities and the multiplexing the UL transmissions with the different priorities are configured simultaneously, the control section controls to perform an operation regarding the simultaneous transmission of the UL transmissions with the different priorities after performing an operation regarding the multiplexing of the UL transmissions with the different priorities.

5. A radio communication method for a terminal comprising:
receiving at least one of: first information regarding a configuration of simultaneous transmission of UL transmissions with different priorities; and second information regarding a configuration of multiplexing of UL transmissions with different priorities; and
controlling, when multiple UL transmissions with different priorities overlap in a time domain, transmission processing of the multiple UL transmissions based on at least one of the first information and the second information.

6. A base station comprising:
a transmitting section that transmits at least one of: first information regarding a configuration of simultaneous transmission of UL transmissions with different priorities; and second information regarding a configuration of multiplexing of UL transmissions with different priorities; and
a control section that controls, when multiple UL transmissions with different priorities overlap in a time domain, reception of the UL transmissions to which transmission processing is performed based on at least one of the first information and the second information.
